Europäisches Patentamt

European Patent Office

Office européen des brevets

(19)

(11) Veröffentlichungsnummer : **0 018 560**
**B1**

(12) **EUROPÄISCHE PATENTSCHRIFT**

(45) Veröffentlichungstag der Patentschrift :
22.09.82

(21) Anmeldenummer : 80102095.9

(22) Anmeldetag : 18.04.80

(51) Int. Cl.³ : **C 03 C 9/00, C 04 B 33/14,
C 04 B 41/10, C 09 C 1/34**

(54) Schwarzes Pigment, Verfahren zu seiner Herstellung sowie seine Verwendung in keramischen Fritten und Fliesen.

(30) Priorität : 26.04.79 US 33440

(43) Veröffentlichungstag der Anmeldung :
12.11.80 (Patentblatt 80/23)

(45) Bekanntmachung des Hinweises auf die Patenterteilung : 22.09.82 Patentblatt 82/38

(84) Benannte Vertragsstaaten :
BE DE FR GB IT NL

(56) Entgegenhaltungen :
AT B 326 236
DE A 2 625 106
DE B 1 646 517
DE B 2 518 283
DE C 717 732
DE C 750 633
GB A 983 175

(73) Patentinhaber : Mobay Chemical Corporation
Penn Lincoln Parkway West
Pittsburgh, Pennsylvania 15205 (US)

(72) Erfinder : Eppler, Richard A.
Adrian Joyce Works 2901 Hawkins Point Road
Baltimore Maryland 21226 (US)

(74) Vertreter : Bünemann, Gerhard, Dr. et al
c/o Bayer AG Zentralbereich, Patente Marken und
Lizenzen
D-5090 Leverkusen 1, Bayerwerk (DE)

EP 0 018 560 B1

## Schwarzes Pigment, Verfahren zu seiner Herstellung sowie seine Verwendung in keramischen Fritten und Fliesen

Die Erfindung betrifft eine neue Art von schwarzem Pigment, ein Verfahren zu seiner Herstellung sowie seine Verwendung in keramischen Fritten und Fliesen.

Einige schwarze keramische Pigmente vom Spinelltyp wurden bereits hergestellt. Die begehrtesten basieren auf der Verwendung von Kobalt. Die Dry Color Manufacturer's Association (DCMA), 1117 N. 19th Street, Suite 100, Arlington, Virginia 22209, U.S.A., veröffentlichte eine Broschüre mit dem Titel « Classification and Chemical Descriptions of Mixed Metal-Oxide Inorganic Colored Pigments ». Es wird angenommen, daß sie, insbesondere auf den Seiten 7 und 18, den Stand der Technik darstellt, der der vorliegenden Erfindung am nächsten kommt.

Der Erfindung liegt weitgehend Nickel (II)-oxid zugrunde. Die oktaedrischen Stellen des erhaltenen Spinells müssen wenigstens etwa 0,4 Mol NiO pro Mol Gesamtmetalloxid in ihrem Aufbau enthalten. Die Tatsache, daß Nickel in dieser Weise verwendet werden kann, um eine schwarze Farbe zu bilden, ist überraschend. Im Material gemäß der Erfindung ist NiO weder eine wahlweise Komponente noch ein Modifikationsmittel oder Wandler. Es ist grundlegend für die oktaedrischen Stellen der Struktur. Im Grunde kann dieser Spinell als nicht naheliegender Abkömmling des Nickel-Eisen-Chromit-Systems angesehen werden.

Das Produkt wird vorteilhaft aus keramischen Rohstoffen, gewöhnlich Oxiden, Carbonaten, Hydroxiden u.dgl., hergestellt, die durch Brennen bei hoher Temperatur in die Spinellstruktur mit den genannten Oxiden in den richtigen Mengenanteilen umgewandelt werden. Diese Temperatur liegt im allgemeinen zwischen etwa 1 093 und 1 260 °C (2 000 und 2 300 °F). Typischerweise werden Brennkapseln zum Brennen verwendet.

Das Spinellpigment gemäß der Erfindung weist eine schwarze Färbung auf und hat die folgende, in Mol ausgedrückte breite Oxidzusammensetzung :

| | | |
|---|---|---|
| $NiO$ | 0,4-1 | |
| $CuO$ | 0 -0,5 | Gruppe I |
| $MnO$ | 0 -0,6 | |
| $Fe_2O_3$ | 0,2-0,8 | |
| $Cr_2O_3$ | 0,2-0,8 | |
| $Mn_2O_3$ | 0 -0,4 | Gruppe II |
| $Al_2O_3$ | 0 -0,15 | |
| $V_2O_3$ | 0 -0,15 | |

mit der Maßgabe, daß die molare Summe der Gruppe I 1 und die molare Summe der Gruppe II zwischen 0,95 und 1,05 beträgt.

Die Produkte gemäß der Erfindung eignen sich als keramische Pigmente, um keramischen Überzügen und Glasuren, z.B. Versätzen zum Glasieren von Fliesen u.dgl., eine intensive schwarze Färbung zu verleihen. Das Pigment eignet sich ferner zum Färben von Keramikwerkstücken, für Glasuren von Tafelgeschirr, sanitären Artikeln (stabil bei Seger-Kegel 10) und Hobbyartikeln und zur Herstellung von Glasfarben. Ein Gemisch des Pigments mit einer Fritte (beide feingemahlen) wird üblicherweise als Glasur auf Fliesen, Kacheln u.dgl. gebrannt.

Zahlreiche Pigmentzusammensetzungen weisen die Spinnellstruktur auf, jedoch ergeben die meisten eine andere Färbung als schwarz, z.B. grün, blau oder braun. Das Produkt gemäß der Erfindung weist hohe Färbekraft oder, mit anderen Worten, hohe Farbintensität auf. Es widersteht ferner dem Angriff beispielsweise durch eine mit ihm gemischte Glasurfritte beispielsweise während eines Brennvorgangs zum Aufbringen einer Glasur auf Biskuitbrandware. Die zur Zeit verfügbaren kobaltfreien schwarzen keramischen Pigmente widerstehen bei diesem Einsatz nur Brenntemperaturen bis zu etwa 800 °C. Bei etwa 1 000 °C wird dieses Pigment abgebaut und löst sich in vielen brauchbaren Glasuren, wobei gewöhnlich eine grüne Farbe entsteht.

Die Spinellpigmente gemäß der Erfindung haben die folgende elementare Zusammensetzung nach Oxiden :

| | Oxid | Weiter Bereich, Mol | Bevorzugter Bereich, Mol |
|---|---|---|---|
| Gruppe I | $NiO$ | 0,4-1 | 0,5 -1 |
| | $CuO$ | 0 -0,5 | 0 -0,5 |
| | $MnO$ | 0 -0,6 | 0 -0,5 |
| | $Fe_2O_3$ | 0,2-0,8 | 0,25-0,75 |
| | $Cr_2O_3$ | 0,2-0,8 | 0,25-0,75 |
| Gruppe II | $Mn_2O_3$ | 0 -0,4 | 0 -0,3 |
| | $Al_2O_3$ | 0 -0,15 | 0 -0,125 |
| | $V_2O_3$ | 0 -0,15 | 0 -0,125 |

mit der Maßgabe, daß die molare Summe der Gruppe I 1 und die molare Summe der Gruppe II zwischen 0,95 und 1,05 beträgt.

Sehr geringe Mengen von Streckmitteln, z.B. Siliciumdioxid beispielsweise aus Sand oder Ton, können vorhanden sein, gehen jedoch nicht in die Spinellstruktur ein und bilden keine Farbe aus. Sie sind lediglich Verdünnungsmittel hinsichtlich der Farbe. Siliciumdioxid kann jedoch dazu neigen, die gebildete Glasur zu härten. Es kann bis zu rund 5 Gew.-% als Komponente des Schwarzen Pigments gemäß der Erfindung verwendet werden. Ebenso könnte erwartet werden, daß SnO modifiziert und als Verdünnungsmittel streckt, ohne in die Spinellstruktur einzugehen. Zink ist unerwünscht, da es eine braune Färbung zu ergeben pflegt, wenn es in eine Spinellstruktur eingeht. Zufällige Verunreinigungen in einer Menge von maximal 3 bis 5 % werden gewöhnlich als Toleranzgrenzen für das Schwarzpigment gemäß der Erfindung angesehen.

Wenn der Anteil des Nickeloxids (NiO) unter etwa 0,4 Mol in der vorstehenden Zusammensetzung gesenkt wird, ist eine braune Farbe die Folge. Wenn die Manganoxidkonzentration über etwa 0,6 Mol oder die Kupfer (I)-oxidkonzentration über etwa 0,5 Mol erhöht wird, entstehen braune Pigmente. Die Anwesenheit von Zinkoxid im Spinell kann ebenfalls braune Pigmente zur Folge haben.

Wenn die Konzentration von Eisen (III)-oxid unter etwa 0,2 Mol gesenkt oder die Konzentration von Chromtrioxid über etwa 0,8 Mol erhöht wird, entsteht ein grünes Pigment. Wenn umgekehrt die Konzentration von Eisen (III)-oxid über etwa 0,8 Mol erhöht oder die Konzentration von Chromoxid unter etwa 0,2 Mol gesenkt wird, entsteht ein braunes Pigment. Eine Erhöhung der Konzentration von Mangantrioxid über etwa 0,4 Mol ergibt ein braunes Pigment; das gleiche ist bei Erhöhung der Aluminiumoxidkonzentration bis über etwa 0,15 Mol der Fall. Eine Erhöhung der Konzentration von Vanadiumtrioxid bis über etwa 0,15 Mol pflegt Nebenprodukte zu ergeben, die die glatte Oberfläche einer gewöhnlichen Glasur, in die das schwarze Pigment gemäß der Erfindung sonst eingeführt werden könnte, verderben.

Die Erfindung wird durch die folgenden Beispiele weiter erläutert.

### Beispiele 1 bis 10

Ausgangsgemenge wurden aus Rohgemengebestandteilen hergestellt, die so bemessen waren, daß die ausgebrannten Oxid-zusammensetzungen mit Spinellstruktur, die in der nachstehenden Tabelle gennant sind, erhalten wurden. In diesen Ausgangsgemengen wurden Rohstoffe aus der aus Nickel (II)-carbonat, gelbem Eisen (III)-hydroxid, Chromoxid ($Cr_2O_3$), Mangan (II)-carbonat, Ammoniummetavanadat, calciniertem Aluminiumoxid und schwarzem Kupfer (II)-oxid bestehenden Gruppe verwendet. Die Ausgangsgemenge der Pigmente mit den Als Beispiele genannten Zusammensetzungen wurden zusammengestellt, gemischt und gemahlen, um gute Vermischung zu gewährleisten. Die Rohgemenge wurden in Brennkapseln gefüllt, abgedeckt, in einen Ofen gestellt und an der Luft bei Temperaturen zwischen 1 093 und 1 260 °C (2 000 und 2 300 °F) calciniert. Nach dem Calcinieren und Kühlen auf Raumtemperatur wurde das gebrannte Pigment aus seiner Brennkapsel entfernt und erneut gemahlen.

Molare Zusammensetzungen
Beispiel Nr.

| Oxid | 1 | 2 | 3 | 4 | 5 | 6 | 7 | 8 | 9 | 10 |
|---|---|---|---|---|---|---|---|---|---|---|
| NiO | 1,00 | 1,00 | 0,50 | 1,00 | 1,00 | 1,00 | 0,50 | 0,875 | 0,975 | 0,90 |
| CuO | — | — | 0,50 | — | — | — | — | — | — | — |
| MnO | — | — | — | — | — | — | 0,50 | 0,125 | 0,025 | 0,10 |
| $Fe_2O_3$ | 0,50 | 0,35 | 0,50 | 0,25 | 0,75 | 0,437 5 | 0,25 | 0,437 5 | 0,487 5 | 0,40 |
| $Cr_2O_3$ | 0,50 | 0,35 | 0,50 | 0,75 | 0,25 | 0,437 5 | 0,50 | 0,50 | 0,50 | 0,50 |
| $Mn_2O_3$ | — | 0,30 | — | — | — | — | 0,25 | 0,062 5 | 0,012 5 | 0,05 |
| $Al_2O_3$ | — | — | — | — | — | 0,125 | — | — | — | — |
| $V_2O_3$ | — | — | — | — | — | — | — | — | — | 0,05 |

Es zeigt sich, daß die Tetraederstellen, die überwiegend aus Nickeloxid mit ein wenig MnO bestehen, zusammmen mit Oktaederstellen, die im wesentlichen das gesamte Chrom und Eisen enthalten und zum Rest aus Mangan bestehen, das vorteilhafteste keramische schwarze Pigment als Produkt ergeben.

### Beispiele 11 bis 23

Je 8 Gew.-Teile der gemäß den Beispielen 1 bis 10 hergestellten gebrannten Pigmente wurden mit 90 Gew.-Teilen einer handelsüblichen Glasurfritte gemischt, die 8 Gew.-% Zinkoxid, 10 Gew.-% Kaolin und 50 Gew.-Teile Wasser enthielt. Diese Fritte ist das Produkt der Handelsbezeichnung Pemco PB 197 (Hersteller SCM Coproration) mit der folgenden Nettozusammensetzung der Oxide (Gew.-%) : 2,4 $K_2O$, 4,0 $Na_2O$, 5,9 CaO, 9,5 ZnO, 11,3 PbO, 7,1 $Al_2O_3$, 6,5 $B_2O_3$ und 53,0 $SiO_2$. Dieses Gemisch wurde 1 Stunde in der Kugelmühle gemahlen und dann auf Biskuitbrandfliesen gesprüht. Die beschichteten Fliesen wurden dann 1 Stunde bei 1 093 °C (2 000 °F) gebrannt, wobei eine keramische Glasur auf den Fliesen gebildet wurde. Die Eigenschaften der Produkte gemäß der Erfindung (Beispiele 11 bis 20) und mehrerer Vergleichsprodukte (Beispiele 21 bis 23), für die übliche schwarze Pigmente bei sonst gleichen Rezepturen verwendet wurden, sind in der nachstehenden Tabelle genannt. Für die erfindungsgemäßen Gemenge wurde eine Glasurfritte verwendet, die Zinkoxid enthielt, weil solche Glasuren übliche schwarze Pigmente am schädlichsten zu beeinträchtigen pflegen. Wie die Ergebnisse zeigen, ergab diese zwingende Verwendung aller als Beispiele genannten Pigmente (Beispiele 11 bis 20) eine schwarze Färbung, die mit dem gleichen kobalthaltigen Spinellpigment gemäß Beispiel 23 durchaus vergleichbar ist. Im Gegensatz hierzu ergab die gleiche Verwendung von zur Zeit erhältlichen kobaltfreien Pigmenten im Falle eines Kupfer-Chromit-Spinellpigments (Beispiel 22) eine grüne Färbung und im Falle eines Eisen Chrom-Hämatitpigments (Beispiel 21 eine braune Färbung.

| Beispiel Nr. | Verwendetes Pigment | | Aussehen | Rd* | a* | b* |
|---|---|---|---|---|---|---|
| 11 | von Beispiel | 1 | schwarz | 4,1 | 0,1 | 0,2 |
| 12 | ″ | 2 | ″ | 4,1 | 0,2 | 0,4 |
| 13 | ″ | 3 | ″ | 6,9 | 0,3 | − 1,4 |
| 14 | ″ | 4 | ″ | 4,6 | 1,7 | 2,1 |
| 15 | ″ | 5 | ″ | 4,1 | 0,2 | 0,3 |
| 16 | ″ | 6 | ″ | 4,2 | 0,7 | 0,4 |
| 17 | ″ | 7 | ″ | 4,3 | 0,5 | 0,6 |
| 18 | ″ | 8 | ″ | 4,4 | 0,1 | 0,2 |
| 19 | ″ | 9 | ″ | 4,5 | 0,1 | 0,4 |
| 20 | ″ | 10 | ″ | 4,7 | 0,2 | 0,1 |
| 21 | üblicher Kupferchromit- spinell | | grün | 12,7 | − 3,2 | 2,5 |
| 22 | aus Eisen-Chrom- Hämatit | | braun | 7,4 | 13,2 | 9,9 |
| 23 | aus Kobalt- haltigem Spinell | | schwarz | 4,5 | 0,3 | 1,0 |

* Diese Werte werden als Standardfarbdifferenzen unter Verwendung eines DIANO-Spektrophotometers mit automatischen Computerberechnungen der Daten gemessen, siehe auch « Journal of the Optical Society of America », 38, Seite 1094, Ziffer 7, (1948) sowie « Color in Business, Science and Industry, D.B. Judd und G. Wyszecki (1963), Seite 296.

### Beispiele 24 bis 29

Die dritte Tabelle veranschaulicht die Verwendung von sechs Pigmenten zum Aufbringen von Glasuren in der für die Biespiele 11 bis 20 beschriebenen Weise. Diese Pigmente waren den Pigmenten gemäß der Erfindung analog, jedoch lagen die Mengenanteile der Komponenten außerhalb der beanspruchten Bereiche der Zusammensetzung. Die Tabelle zeigt die Ergebnisse für diese Glasuren unter Verwendung dieser Zusammensetzungen (Beispiele 24 bis 29) in der gleichen Weise wie für die beanspruchten Zusammensetzungen in der gemäß den Beispielen 24 bis 29 verwendeten Glasur.

### Molare Zusammensetzungen

| | Beispiel Nr. | | | | | |
|---|---|---|---|---|---|---|
| Oxid | 24 | 25 | 26 | 27 | 28 | 29 |
| NiO | 1,00 | 1,00 | — | 1,00 | — | 0,25 |
| CuO | — | — | 1,00 | — | — | — |
| MnO | — | — | — | — | 1,00 | 0,75 |
| $Fe_2O_3$ | — | 1,00 | 0,50 | 0,375 | 0,50 | 0,125 |
| $Cr_2O_3$ | 1,00 | — | 0,50 | 0,375 | 0,50 | 0,50 |
| $Mn_2O_3$ | — | — | — | — | — | 0,375 |
| $Al_2O_3$ | — | — | — | 0,25 | — | — |

4

| Aussehen | dunkel-grün | dunkel-braun | dunkel-braun | dunkel-braun | dunkel-braun | dunkel-braun |
|---|---|---|---|---|---|---|
| Rd | 6,0 | 6,9 | 8,4 | 4,4 | 4,5 | 4,9 |
| a | − 4,6 | 2,2 | 2,1 | 1,3 | 1,6 | 1,3 |
| b | 4,1 | 2,0 | − 0,4 | 1,2 | 1,7 | 1,7 |

Die vorstehenden Ergebnisse zeigen eindeutig die Güte des Pigments gemäß der Erfindung. Das Pigment kann ferner in Kunststoffen, Anstrichmitteln und anderen organischen oder anorganischen Überzugsmitteln verwendet werden.

**Ansprüche**

1. Spinellpigment mit schwarzer Färbung und der folgenden, in Mol ausgedrückten Nettozusammensetzung der Oxide :

| | | |
|---|---|---|
| NiO | 0,4-1 | |
| CuO | 0 -0,5 | Gruppe I |
| MnO | 0 -0,6 | |
| $Fe_2O_3$ | 0,2-0,8 | |
| $Cr_2O_3$ | 0,2-0,8 | |
| $Mn_2O_3$ | 0 -0,4 | Gruppe II |
| $Al_2O_3$ | 0 -0,15 | |
| $V_2O_3$ | 0 -0,15 | |

mit der Maßgabe, daß die molare Summe der Gruppe I 1 und die molare Summe der Gruppe II zwischen 0,95 und 1,05 beträgt.

2. Pigment nach Anspruch 1, gekennzeichnet durch die folgende Zusammensetzung :

| | | |
|---|---|---|
| NiO | 0,5 -1 | |
| CuO | 0 -0,5 | Gruppe I |
| MnO | 0 -0,5 | |
| $Fe_2O_3$ | 0,25-0,75 | |
| $Cr_2O_3$ | 0,25-0,75 | |
| $Mn_2O_3$ | 0 -0,3 | Gruppe II |
| $Al_2O_3$ | 0 -0,125 | |
| $V_2O_3$ | 0 -0,05 | |

3. Pigment nach Anspruch 1, dadurch gekennzeichnet, daß es einen geringen Anteil eines streckenden Oxids enthält, das nicht in der Spinellstruktur vorhanden und im wesentlichen als Verdünnungsmittel der Farbe wirksam ist.

4. Verfahren zur Herstellung von schwarzem Pigment, nach Anspruch 1 dadurch gekennzeichnet, daß man einen rohen Ansatz der Rohstoffe von keramischer Qualität in Mengenanteilen, die so dosiert sind, daß ein Spinell gemäß Anspruch 1 entsteht, bei einer Temperatur von 1 038 bis 1 316 °C (1 900 bis 2 400 °F) brennt.

5. Verwendung des Pigmentes nach einem der Ansprüche 1 bis 3 als färbenden Mischungsbestandteil in keramischen Fritten.

6. Verwendung des Pigmentes nach einem der Ansprüche 1 bis 3 als Farbkörper bei der Glasur von Fliesen.

**Claims**

1. Spinel pigment exhibiting black colouration and having the following net oxide composition expressed in mols :

| | | |
|---|---|---|
| NiO | 0.4-1 | |
| CuO | 0 -0.5 | Group I |
| MnO | 0 -0.6 | |
| $Fe_2O_3$ | 0.2-0.8 | |
| $Cr_2O_3$ | 0.2-0.8 | |
| $Mn_2O_3$ | 0 -0.4 | Group II |
| $Al_2O_3$ | 0 -0.15 | |
| $V_2O_3$ | 0 -0.15 | |

with the proviso that the molar sum of group I is 1 and the molar sum of group II is between 0.95 and 1.05.

2. Pigment according to Claim 1, characterised by the following composition :

| | | |
|---|---|---|
| NiO | 0.5 -1 | ) |
| CuO | 0 -0.5 | } Group I |
| MnO | 0 -0.5 | ) |
| Fe$_2$O$_3$ | 0.25-0.75 | ) |
| Cr$_2$O$_3$ | 0.25-0.75 | |
| Mn$_2$O$_3$ | 0 -0.3 | } Group II |
| Al$_2$O$_3$ | 0 -0.125 | |
| V$_2$O$_3$ | 0 -0.05 | ) |

3. Pigment according to Claim 1, characterised in that it contains a small proportion of an extender oxide which is not present in the spinel structure and acts essentially as a diluent of the colour.

4. Process for the preparation of the black pigment according to Claim 1, characterised in that a raw batch of ceramic grade raw materials are calcined at a temperature of 1 038 to 1 316 °C (1 900 to 2 400 °F), in proportions metered to yield a spinel according to Claim 1.

5. Use of the pigment according to one of Claims 1 to 3 as the colouring mixture component in ceramic frits.

6. Use of the pigment according to one of Claims 1 to 3 as the colouring agent in tile glazing.

**Revendications**

1. Pigment de spinelle de coloration noire et de composition nette en oxydes suivante, exprimée en moles :

| | | |
|---|---|---|
| NiO | 0,4-1 | ) |
| CuO | 0 -0,5 | } Groupe I |
| MnO | 0 -0,6 | ) |
| Fe$_2$O$_3$ | 0,2-0,8 | ) |
| Cr$_2$O$_3$ | 0,2-0,8 | |
| Mn$_2$O$_3$ | 0 -0,4 | } Groupe II |
| Al$_2$O$_3$ | 0 -0,15 | |
| V$_2$O$_3$ | 0 -0,15 | ) |

avec la condition que la somme molaire du groupe I est de 1 et la somme molaire du groupe II est comprise entre 0,95 et 1,05.

2. Pigment selon la revendication 1, caractérisé par la composition suivante :

| | | |
|---|---|---|
| NiO | 0,5 -1 | ) |
| CuO | 0 -0,5 | } Groupe I |
| MnO | 0 -0,5 | ) |
| Fe$_2$O$_3$ | 0,25-0,75 | ) |
| Cr$_2$O$_3$ | 0,25-0,75 | |
| Mn$_2$O$_3$ | 0 -0,3 | } Groupe II |
| Al$_2$O$_3$ | 0 -0,125 | |
| V$_2$O$_3$ | 0 -0,05 | ) |

3. Pigment selon la revendication 1, caractérisé en ce qu'il contient une faible proportion d'un oxyde diluant, qui n'est pas présent dans la structure de spinelle et qui est actif essentiellement comme agent diluant de la couleur.

4. Procédé pour la préparation de pigments noirs selon la revendication 1, caractérisé en ce que l'on cuit à une température d'environ 1 038 à 1 316 °C (1 900 à 2 400 °F) une charge brute des matières premières de qualité céramique en proportions dosées de telle sorte qu'il se forme une spinelle selon la revendication 1.

5. Utilisation du pigment selon l'une des revendications 1 à 3 comme constituant colorant de mélange dans des frittes céramiques.

6. Utilisation du pigment selon l'une des revendications 1 à 3 comme corps colorant dans le vernissage de carreaux.